# EUROPEAN PATENT SPECIFICATION

(11) **EP 0 304 927 B1**
(45) Date of publication and mention of the grant of the patent: **07.04.1993**
(21) Application number: 88113899.4
(22) Date of filing: 25.08.1988
(51) Int. Cl.: G11B 5/716, G11B 5/68, G11B 5/70, G11B 5/706

(54) **Perpendicular magnetic recording medium**
Aufzeichnungsträger mit senkrechter Magnetisierung
Milieu d'enregistrement magnétique perpendiculaire

(30) Priority: 26.08.1987 JP 211569/87; 08.02.1988 JP 25817/88
(43) Date of publication of application: 01.03.1989
(73) Proprietor: SONY CORPORATION, Tokyo 141 (JP)
(72) Inventor: Ochiai, Yochitaka, Shinagawa-ku Tokyo Kanagawa (JP); Aso, Koichi, Shinagawa-ku Tokyo Kanagawa (JP); Hashimoto, Syunichi, Shinagawa-ku Tokyo Kanagawa (JP)
(74) Representative: TER MEER STEINMEISTER & PARTNER GbR

(56) References cited:
- US-A- 4 587 176
- US-A- 4 678 721

## Description

### Field of the Invention

This invention relates to a perpendicular magnetic recording medium, the recording layer of which is the perpendicular magnetic anisotropic film having the magnetic moment oriented perpendicularly to the film surface.

### Prior Art

In recent years, the tendency in the field of magnetic recording is towards higher recording density which may be achieved by shorter wavelengths and narrower track widths. A perpendicular magnetic recording system is proposed in order to meet the demand for higher recording density.

In this perpendicular magnetic recording system, it is necessary to employ a perpendicular magnetic recording medium, the recording layer of which is a perpendicular magnetic anisotropic film having the magnetic moment oriented perpendicularly to the film surface. For industrial application of this recording system, eager researches mainly directed to the materials of the recording layer are presently underway.

As one of the typical perpendicular magnetic anisotropic films, the Co-Cr alloy magnetic film is proposed and studies are presently continued on this material.

However, the Co-Cr alloy magnetic film leaves much to be desired and has not yet been fully exploited because the alloy film has only poor physical properties, such as excess hardness, low durability and susceptibility to wear upon contact with the magnetic head. The magnetic properties of the perpendicular magnetic recording medium having the Co-Cr alloy magnetic layer as the recording layer, for example, the rectangular ratio in the perpendicular direction, is only 0.3 to 0.4, which is far below the ideal value equal to unity.

On the other hand, studies are also continued on the perpendicular magnetic recording medium formed of materials other than the Co-Cr alloy. For example, the rare earth-transition metal amorphous film, the usage of which as the magneto-optical recording medium is highly promising, has a rectangular ratio almost equal to unity.

However this amorphous film has only poor corrosion resistance because of the contents of the rare earth elements such that it is extremely difficult to apply this film to a perpendicular magnetic recording system adapted for performing recording and/or reproduction by an electromagnetic induction type magnetic head.

The Co-Pt or Co-Pd base material, enploying noble metals, such as Pt or Pd, in place of rare earth elements, is also promising as the recording material having excellent corrosion resistance. However, as described in the USP 4587176 or USP 4678721, the Co-Pt or Co-Pd base material displays only limited perpendicular magnetic anisotropy for a larger film thickness of the order of 2000 Å, while it leaves much to be desired in, for example, the rectangular ratio. Also the perpendicular anisotropy is exhibited within narrow limits of the respective thicknesses of Co, Pt and Pd layers.

### OBJECTS AND SUMMARY OF THE INVENTION

It is therefore a principal object of the present invention to provide a perpendicular magnetic recording medium having perpendicular magnetic characteristics, such as the coercive force and the rectangular ratio, superior to those of the Co-Cr base perpendicular magnetic recording medium.

It is another object of the present invention to provide a perpendicular magnetic recording medium having excellent corrosion resistance and having perpendicular magnetic anisotropy over a wide range.

The present invention provides a perpendicular magnetic recording medium having an multi layered film formed upon alternately stacking of the Co and Pd and/or Pt as the recording layer having a total thickness ranging between 50 and 800 Å and having excellent corrosion resistance and perpendicular magnetic characteristics.

The present invention provides a perpendicular magnetic recording medium having the aforementioned multi layered film as the recording layer, wherein a metal film having a prescribed film thickness is formed as an under layer to improve further the coercive force and the rectangular ratio.

The perpendicular magnetic recording medium having as the recording layer the multi layered film obtained upon alternately stacking Co and at least one of Pt and Pd, has excellent corrosion resistance in that it is free of rare earth elements. Above all, extremely favorable perpendicular magnetic anisotropy can be accomplished with the total thickness ranging between 50 and 800 Å.

When the metal film having a prescribed film thickness is formed as the under layer in the above described perpendicular magnetic recording medium, the coercive force is significantly increased, while the film thickness and gas pressure dependency of the magnetic characteristics are simultaneously improved.

### BRIEF DESCRIPTION OF THE DRAWINGS

Fig. 1 is a characteristics diagram showing the region of the Co-Pt base multi layered film displaying perpendicular magnetic anisotropy.

Fig. 2A and 2B are characteristic diagrams showing curves of perpendicular magnetization or M-H loops of a typical Co-Pt base multi layered film, wherein Fig. 2A shows the magnetization curve of the film shown at point A in Fig. 1, and Fig. 2B shows the magnetization curve of the film shown at point B in Fig. 1.

Fig. 3 is a characteristic diagram showing the coercive force of a typical Co-Pt base multi layered film.

Fig. 4 is a characteristic diagram showing saturation magnetization of a typical Co-Pt base multi layered film.

Fig. 5 is a characteristic diagram showing the argon gas pressure dependency of the rectangular ratio and the coercive force of the Co-Pt base multi layered film.

Fig. 6 is a characteristic diagram showing the film thickness dependency of the coercive force and the rectangular ratio of the Co-Pt base multi layered film.

Figs. 7A and 7B are characteristic diagrams showing the difference in the perpendicular magnetization curves or M-H loops of the Co-Pt base multi layered films having different film thicknesses, wherein Fig. 7A shows the M-H loop for the film having a film thickness of 160 Å and Fig. 7B shows the M-H loop of the film having the film thickness of 1450 Å.

Fig. 8 is a characteristic diagram showing regions of the Co-Pd base multi layered film showing perpendicular magnetic anisotropy.

Figs. 9A and 9B are characteristic diagrams showing the perpendicular magnetization curves or M-H loops of the typical Co-Pd base multi layered film, wherein Fig. 9A shows a magnetization curve for the film shown at point C in fig. 8 and Fig. 9B shows a magnetization curve for the film shown at point D in Fig. 8.

Fig. 10 is a characteristic diagram showing the coercive force of a typical Co-Pd base multi layered film.

Fig. 11 is a characteristic diagram showing the saturation magnetization of a typical Co-Pd base multi layered film.

Fig. 12 is a characteristic diagram showing the argon gas pressure dependency of the coercive force and the rectangular ratio of a Co-Pd base multi layered film.

Fig. 13 is a characteristic diagram showing the rectangular ratio and coercive force of a Co-Pd base multi layered film for an argon gas pressure of 5 mTorr.

Fig. 14 is a characteristic diagram showing the rectangular ratio and the coercive force of a Co-Pd base multi layered film for an argon gas pressure of 11 mTorr.

Figs. 15A and 15B are characteristic diagrams showing the difference in the perpendicular magnetization curve or M-H loop for the Co-Pd multi layered film with the difference thicknesses, wherein Fig. 15A shows a M-H loop for the film having a film thickness of 370 Å and Fig. 15B shows a M-H loop for the film having a film thickness of 1500 Å.

Fig. 16 is a characteristic diagram showing the region of the Co-Pt base multi layered film having a Pt under layer, showing perpendicular magnetic anisotropy.

Fig. 17 is a characteristic diagram showing the perpendicular magnetization curve or M-H loop of an multi layered film shown at mid point E in Fig. 16.

Figs. 18A and 18B are characteristic diagrams showing the difference in the magnetization curve or M-H loop of a Co-Pt base multi layered film caused by the presence or absence of the Pt under layer, wherein Fig. 18A shows the M-H loop in the presence of the under layer and Fig. 18B shows the M-H loop in the absence of the under layer.

Fig. 19 is a characteristic diagram showing the coercive force of a typical Co-Pt base multi layered film having the Pt under layer.

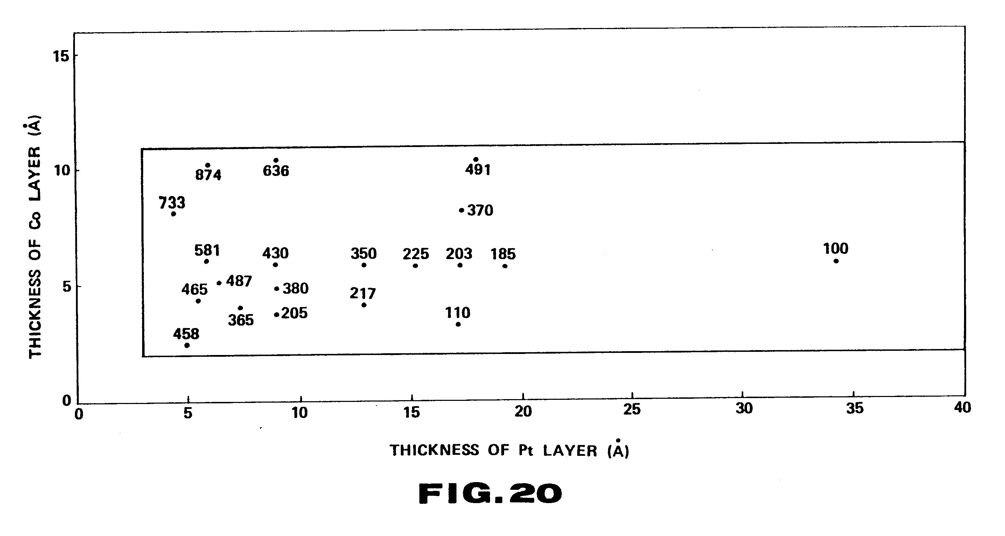

Fig. 20 is a characteristic diagram showing saturation magnetization of a typical Co-Pt base multi layered film having the Pt under layer.

Fig. 21 is a characteristic diagram showing the film thickness dependency of the rectangular ratio and coercive force of a Co-Pt base multi layered film having the Pt under layer.

Fig. 22 is a characteristic diagram showing the argon gas dependency of the rectangular ratio and coercive force of a Co-Pt base multi layered film having the Pt under layer.

Fig. 23 is a characteristic diagram showing the base coat thickness dependency of the coercive force in the Co-Pt base multi layered film.

Fig. 24 is a characteristic diagram showing the region of the Co-Pd base multi layered film provided with the Pd under layer, showing perpendicular magnetic anisotropy.

Fig. 25 is a characteristic diagram showing a perpendicular magnetization curve or M-H loop of an multi layered film shown at a mid point H in Fig. 17.

Fig. 26 is a characteristic diagram showing the coercive force of a typical Co-Pd base multi layered film having the Pd under layer.

Fig. 27 is a characteristic diagram showing saturation magnetization of a typical Co-Pd multi layered film having the Pd under layer.

Fig. 28 is a characteristic diagram showing the film thickness dependency of the rectangular ratio and the coercive force of a Co-Pd base multi layered film having the Pd under layer.

Fig. 29 is a characteristic diagram showing the argon gas pressure dependency of the rectangular ratio and the coercive force of a Co-Pd base multi layered film having the Pd under layer.

Fig. 30 is a characteristic diagram showing the under layer thickness dependency of the coercive force in the Co-Pd base multi layered film.

### DETAILED DESCRIPTION OF THE INVENTION

As a result of our eager and preseverant researches for accomplishing the above objects, the present inventors have found that a multi layered film obtained upon stacking a Co layer and a Pd and/or Pt layer shows superior perpendicular magnetic anisotropy over an extremely thin total thickness region. This finding has led to fulfilment of the present invention.

Thus the perpendicular magnetic recording medium according to the present invention is characterized in that it has a multi layered film, obtained upon alternately stacking Co layer and Pd and/or Pt layer, as the recording layer, and in that the total thickness of the recording layer ranges between 50 and 800 Å.

The multi layered film that may be used as the recording layer in the perpendicular magnetic recording medium is a Co-Pt base multi layered film obtained upon alternately stacking the Co and Pt layers; a Co-Pd base multi layered film obtained upon alternately stacking the Co and Pd layers; or a Co-Pt-Pd base multi layered film obtained upon alternately stacking the Co, Pt and Pd layers. In the Co-Pt-Pd base multi layered film, the stacking structure may be formed by alternately stacking Co layer and Pt-Pd alloy layer or by stacking the layers in the order of Co-Pt-Co-Pd or Co-Pt-Pd-Co.

In any case, the total thickness of the multi layered film which is to be the recording layer is preferably in the range from 50 to 800 Å. Above all, in case of a Co-Pt type multi layered film, it is most preferred that the thicknesses of the Co and Pt layers be in the ranges of 2 to 8 Å and 3 to 40 Å, respectively and the total thickness be in the range of from 50 to 800 Å and it is within these thickness ranges that superior perpendicular magnetic anisotropy is obtained.

Similarly, in the case of the Co-Pd base multi layered film, superior perpendicular magnetic anisotropy is obtained for the Co and Pd layer thicknesses ranging from 1 to 9 Å and from 2 to 40 Å, respectively, and the total thickness ranging from 50 to 800 Å.

The above ranges for film thicknesses are selected for optimizing the perpendicular magnetic anisotropy and, in any cases, an in-plane magnetization component is generated outside these ranges to deteriorate the perpendicular rectangular ratio.

It is noted that the interface of the metal layers constituting the aforementioned multi layered films should ideally be flattened without entanglement of different kinds of metal atoms to present a so-called superlattice structure. However, these interfaces may present certain disorders such that the composition may be fluctuated with a certain periodicity in its entirety according to a so called modulated structure or a composition-modulated structure.

The above described multi layered film may be formed by, for example, sputtering, vacuum deposition or molecular beam epitaxy (MBE).

In case of the binary systems, such as Co-Pd or Co-Pt base systems, evaporation sources need be provided separately for the respective component metals. In case of a ternary system, such as the Co-Pd-Pt system, Pd and Pt may be combined into an alloy evaporation source, or an evaporation source for minority component metal may be placed on a evaporation source for the other metal, besides preparing separate evaporation sources for the respective component metals. For example, when desired to produce the aforementioned ternary system perpendicular magnetic recording medium by sputtering, simultaneous binary sputtering employing a Co target and Pd target on which rests a Pt chip, simultaneous ternary sputtering employing Co, Pd and Pt targets, or simultaneous quaternary sputtering employing Co and Pt targets and two Pd targets for stacking the metal layers in the order of Co-Pd-Pt-Pd, may be resorted to.

In addition, before forming the above described multi layered film as the recording layer, a metal layer may be previously formed on a suitable substrate, such as a glass plate, by sputtering, vacuum evaporation or MBE.

As the element constituting the under layer metal layer, the metal having a face centered crystal structure (fcc structure) is preferred, such that at least one of Cu, Rh, Pd, Ag, Ir, Pt, Au or Al is employed. However, the element W, for example, having a body-centered structure (bcc structure) may also be employed. These elements may be used either singly or in combination.

The film thickness for each of the above metal films is preferably 200 to 2000 Å. With the film thicknesses of the metal layers less than 200 Å no positive effects can be expected. On the other hand, the film thicknesses above 2000 A is not favorable from the viewpoint of productivity since the effects cease to be increased.

As apparent from the above description, the perpendicular magnetic recording medium of the present invention makes the best use of the superior perpendicular magnetic anisotropy in the region of small film thickness of the Co-Pt or Co-Pd base multi layered film, including a modulated structure film, such that it has an excellent corrosion resistance and, above all, a superior rectangular ratio.

Therefore, the present invention provides a perpendicular magnetic recording medium that is excellent in the rectangular ratio, coercive force and film characteristics, to make possible a perpendicular magnetic recording with higher quality and density. The present invention also has an outstanding technical significance in that it enables a wide variety of the magnetic materials to be selectively employed in the field of perpendicular magnetic recording.

In addition, the perpendicular magnetic recording medium of the present invention may be improved further in coercive force when provided with the under layer having a prescribed film thickness, for accomplishing a higher coercive force and a higher recording density and recording quality.

The present invention will be explained with reference to certain Examples. It is to be noted that these Examples are for illustration only and are not intended to limit the invention to the specific details of these embodiments.

Before proceeding to the description of the Examples, the method of forming the perpendicular magnetization film as the recording layer is explained.

The perpendicular magnetization film, having the multi layered or modulated structure, obtained upon stacking Co and Pt or Pd on the monoatomic level, was prepared by magnetron sputtering.

As the targets, Co, Pt and Pd disks each 100 mm in diameter, were employed. For Co, d.c. sputtering with a power of 0.2 to 1 A and 300 V was employed and for Pt and Pd, d.c. sputtering with a power of 0.2 to 1 A and 300 V or a high frequency (RF) sputtering with a making power of 200 to 500 V, was adopted.

Under the above conditions, the films were formed on a water-cooled substrate under various argon pressures. It is noted that the periodicity of the multi layered structure was established by changing the rotational speed of the substrate and the target deposition speed.

The presence or absence of the artificial super structure was checked by X-ray small angle scattering tests and the period thereof was measured from the peaks of the small angle scattering.

Also the presence or absence of perpendicular magnetic anisotropy of the produced perpendicular magnetization films was checked using a vibrating sample type magnetometer for evaluating various magnetic properties of the produced films.

### Example 1

The present Example is concerned with a recording medium having a Co-Pt film obtained upon alternately stacking Co and Pt layers, as the perpendicular magnetization film.

The Co-Pt film was formed under an argon gas pressure of 5 mTorr (0.66 Pa) to a total thickness of 100 Å.

The sample films with varying thicknesses of the Co and Pt layers were prepared and investigations were made into the thickness ranges for which the perpendicular magnetic anisotropy was obtained.

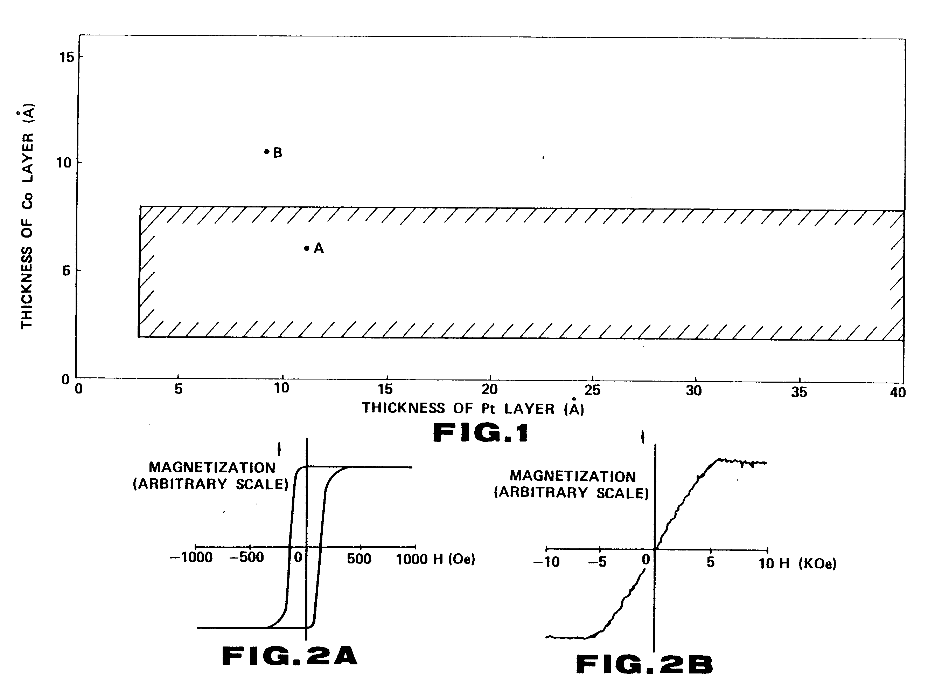

In Fig. 1, the thicknesses for the Co and Pt layers were plotted on the ordinate and the abscissa, respectively. The regions indicated by hatched lines in the drawing represent those showing perpendicular magnetic anisotropy in the Co-Pt base multi layered film.

In the present Co-Pt base multi layered film, the perpendicular magnetization film is obtained under specific combination of the thicknesses of the respective atom layers, that is, of the thicknesses of the Co layer and the Pt layer ranging between 2 and 8 Å and 3 to 40 Å, respectively.

Figs. 2A and 2B show perpendicular magnetization curves or M-H loops of the multi layered films shown at A and B in Fig. 1, respectively.

The multi layered film (point A) under the conditions of providing perpendicular magnetic anisotropy as indicated in Fig. 1 was the perpendicular magnetization film having excellent rectangular characteristics and a rectangular ratio equal to unity, as shown at A in Fig. 2.

Conversely, the multi layered film (point B) lying outside the above defined thickness range failed to show perpendicular magnetic anisotropy as indicated at B in Fig. 2.

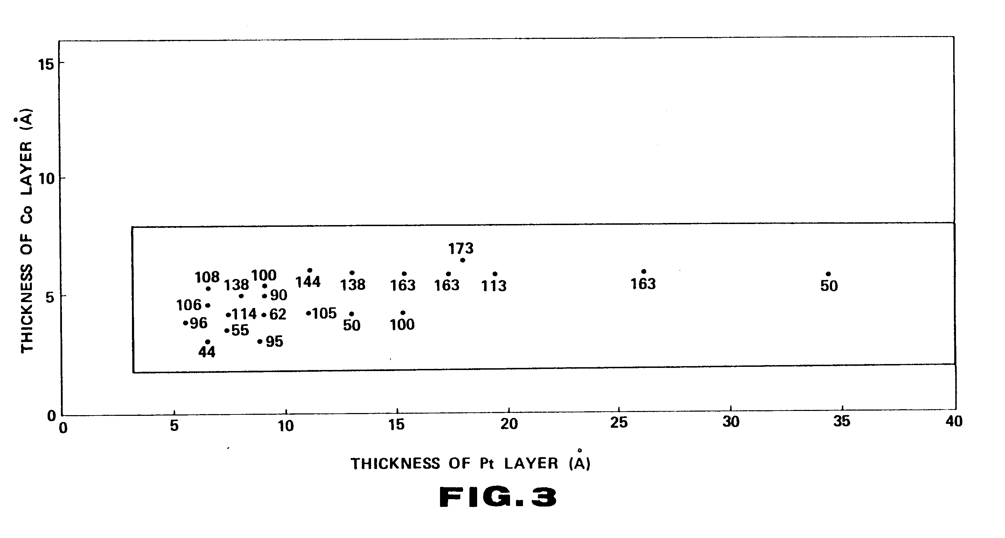

Fig. 3 shows the values of the coercive force Hc, found from the M-H loop, of typical samples showing perpendicular magnetic anisotropy. The respective figures in Fig. 3 indicate the values of the coercive force Hc and the respective points in oersteds (Oe).

As may be seen from Fig. 3, each of the samples has a coercive force of the order of several tens to 200 oersteds.

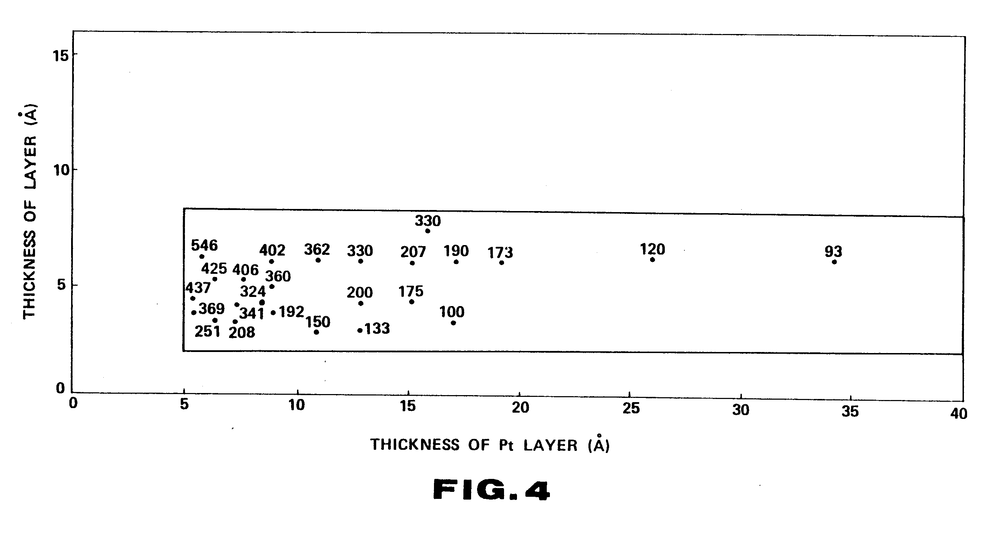

Fig. 4 shows the values of saturation magnetization Ms, in emu/cm³, of typical samples showing perpendicular magnetic anisotropy.

The values of saturation magnetization was several tens to 600 emu/cm³ for samples showing perpendicular magnetic anisotropy, although they differ slightly depending on the thickness ratio of the respective atom layers. When reckoned in terms of the saturation magnetic flux density Bs, these values are equivalent to several hundreds gauss to 7.5 kG (kilogauss) thus indicating that the samples had a sufficient saturation magnetic flux density Bs as the perpendicular magnetic recording medium.

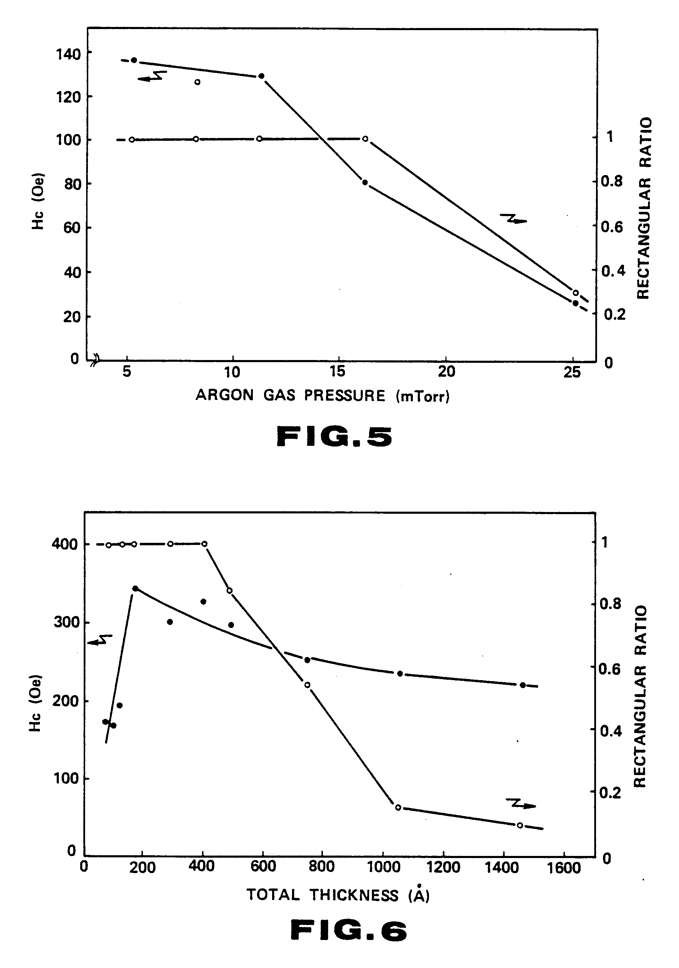

The argon gas pressure dependency, above all, the argon gas pressure dependency of the rectangular ratio and the coercive force during film formation was checked. The produced Co-Pt base multi layered film had a total thickness of 100 Å and the Co and Pt layer thicknesses of 6 and 17.2 Å, respectively. The results are shown in Fig. 5.

The Co-Pt base multi layered film has excellent rectangular characteristics, such as the rectangular ratio about equal to unity, for the argon gas pressure less than about 25 mTorr (3.29 Pa), although in-plane anisotropy was shown under the elevated argon gas pressure of the order of 25 mTorr (3.29 Pa). When the values of the coercive force are also considered, it is preferred that the argon gas pressure during formation of the Co-Pt base multi layered film be lower (not higher than 11 mTorr - 1.45 Pa).

Finally, changes in the magnetic characteristics in case the film thicknesses of the Co-Pt base multi layered film were changed for the constant argon gas pressure during the film formation were checked.

The thicknesses of the Co and Pt layers for the Co-Pt base multi layered film were 6 and 17.2 Å, respectively, with the argon gas pressure during the film formation being 5 mTorr (0.66 Pa).

Fig. 6 shows the film thickness dependency of the coercive force Hc and the rectangular ratio, as found from the M-H loop. It is seen that the coercive force Hc becomes maximum for the lower values of the film thicknesses. In the present sample, the coercive force Hc showed locally maximum values in the vicinity of the film thickness of 160 Å. In general, the coercive force Hc reached a maximum value for the film thickness of 100 to 300 Å.

In Fig. 3, the values of the coercive force Hc of the Co-Pt base multi layered film having a film thickness of 100 Å are shown. As shown in Fig. 6, extremely large values of the coercive force Hc may be occasionally obtained for the film thickness not less than 100 Å. In the present sample, the coercive force reached about 350 Oe. It is estimated that, with a Co-Pt base multi layered film prepared under the film thickness and argon gas pressure corresponding to the maximum value of the coercive force Hc, the coercive force Hc as large as 400 Oe at the maximum as indicated herein may be realized.

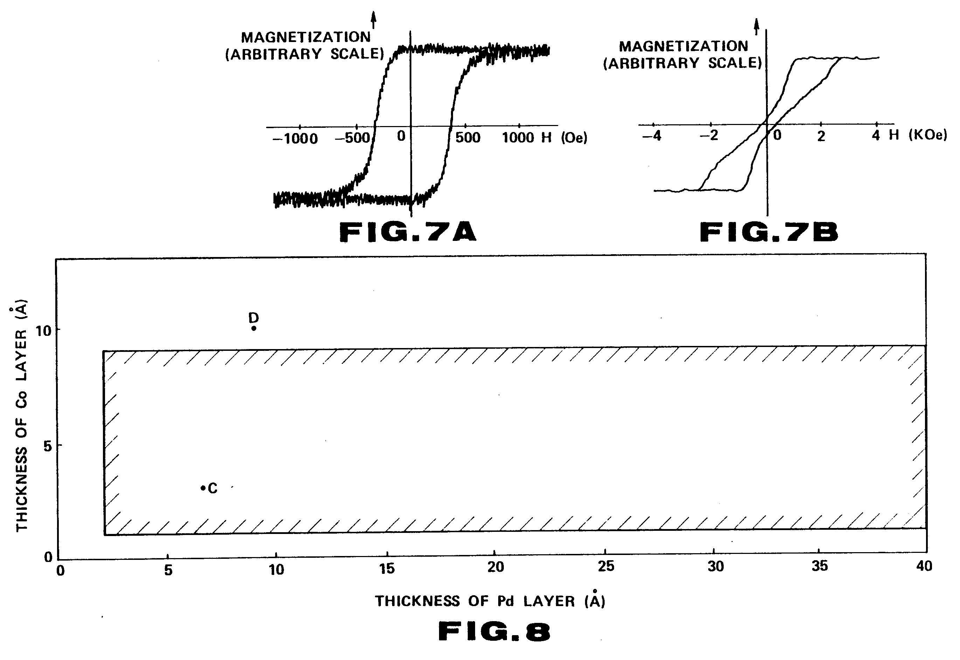

The rectangular ratio is about equal to unity for the film thickness not larger than 400 Å, as shown in Fig. 6, and is lowered gradually with the increase in film thickness until it is lowered to extremely small values of 0.1 to 0.15 for the film thickness not less than 1000 Å. Figs. 7A and 7B show M-H loops having film thicknesses of 160 Å and 1450 Å, respectively. It is seen from these figures that the film thickness not less than 1000 Å is not practical because of the extremely low values of the rectangular ratio.

The Co-Cr magnetic film, which has been studied and investigated as the perpendicular magnetic recording medium, generally has a rectangular ratio of the order of 0.1 to 0.3. As shown in Figs. 6 and 7A, the Co-Pt base multi layered film may be said to have a rectangular ratio generally superior to that of the Co-Cr magnetic film then the film thickness of the Co-Pt base multi layered film is not larger than 1000 Å and, above all, not larger than 800 Å. With the film thickness of not larger than 400 Å, the perpendicular magnetic recording medium has a superior rectangular ratio equal to unity.

It has been demonstrated that the above described Co-Pt base multi layered film undergoes no changes in characteristics when allowed to stand under the constant temperature of 80 °C and relative humidity (RH) of 85% for 100 hours, while presenting no problems in corrosion resistance.

### Example 2

The present Example is concerned with a recording medium having the Co-Pd layer obtained upon alternately stacking Co and Pd layers as the perpendicular magnetization film.

The Co-Pd film was formed under an argon gas pressure of 11 mTorr to a total thickness of 150 Å.

The sample films with varying thicknesses of the Co and Pd layers were prepared and investigations were made into the thickness ranges for which the perpendicular magnetic anisotropy was obtained.

In Fig. 8, the thicknesses for the Co and Pd layers were plotted on the ordinate and the abscissa, respectively. The regions indicated by hatched lines in the drawing represent those showing perpendicular magnetic anisotropy in the Co-Pd base multi layered film.

In the present Co-Pd base multi layered film, the perpendicular magnetization film is obtained under specific combination of the thicknesses of the respective atom layers, that is, of the thicknesses of the Co layer and the Pd layer ranging between 1 and 9 Å and 2 to 40 Å, respectively.

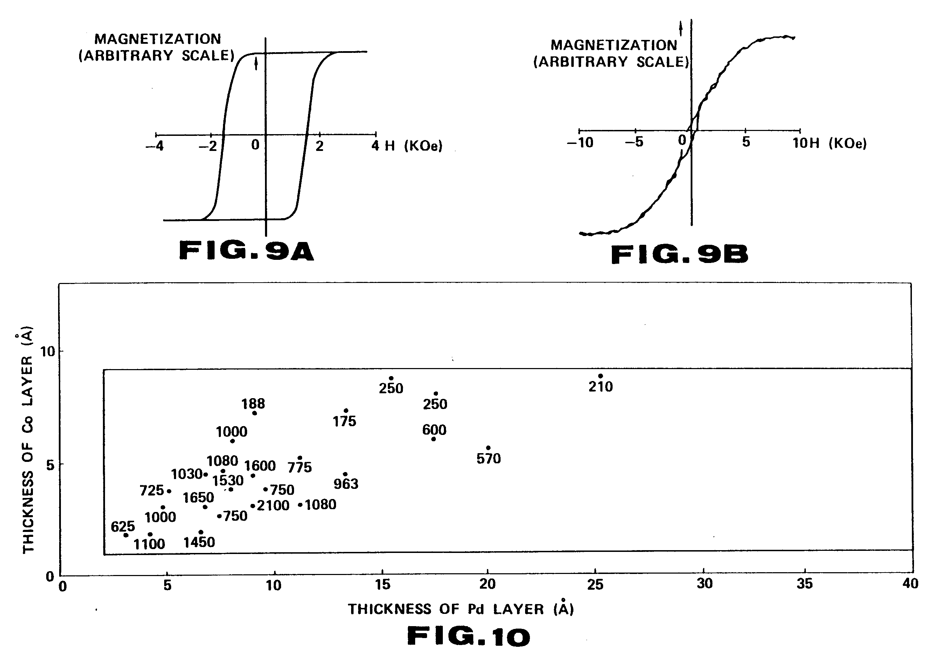

Figs. 9A and 9B show perpendicular magnetization curves or M-H loops of the multi layered films shown at C and D in Fig. 8, respectively.

The multi layered film (point C) under the conditions of providing perpendicular magnetic anisotropy as indicated in Fig. 8 was the perpendicular magnetization film having excellent rectangular characteristics and a rectangular ratio equal to unity, as shown at A in Fig. 9.

Conversely, the multi layered film (point B) lying outside the above defined thickness range failed to show perpendicular magnetic anisotropy as indicated at B in Fig. 9.

Fig. 10 shows the values of the coercive force Hc, found from the M-H loop, of typical samples showing perpendicular magnetic anisotropy. The respective figures in Fig. 10 indicate the values of the coercive force Hc at the respective points in oersteds (Oe).

As may be seen from Fig. 10, each of the samples has a coercive force of the order of several hundreds to 2000 oersteds.

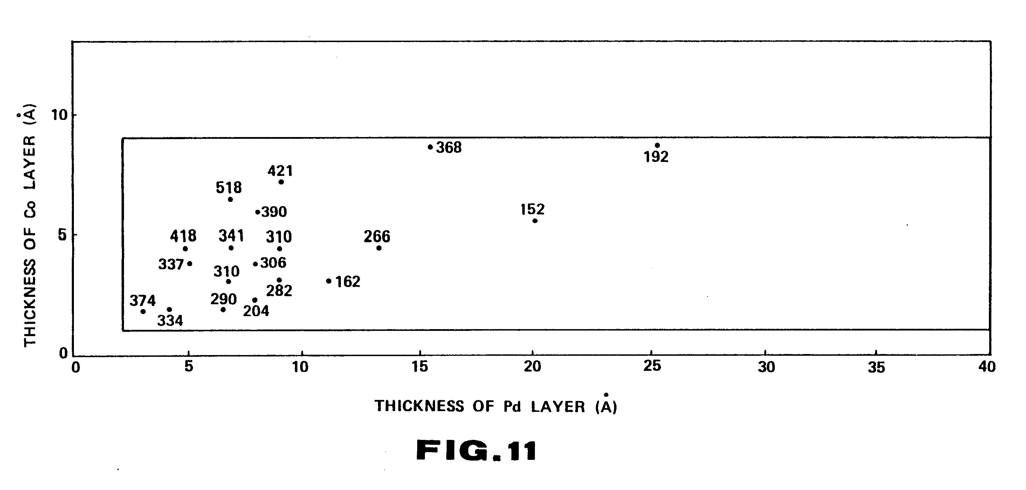

Fig. 11 shows the values of saturation magnetization Ms, in emu/cm³, of typical samples showing perpendicular magnetic anisotropy.

The values of saturation magnetization was several tens to 600 emu/cm³ for samples showing perpendicular magnetic anisotropy, although they differ slightly depending on the thickness ratio of the respective atom layers. When reckoned in terms of the saturation magnetic flux density Bs, these values are equivalent to several hundreds gauss to 7.5 kG (kilogauss) thus indicating that the samples had a sufficient saturation magnetic flux density Bs as the perpendicular magnetic recording medium.

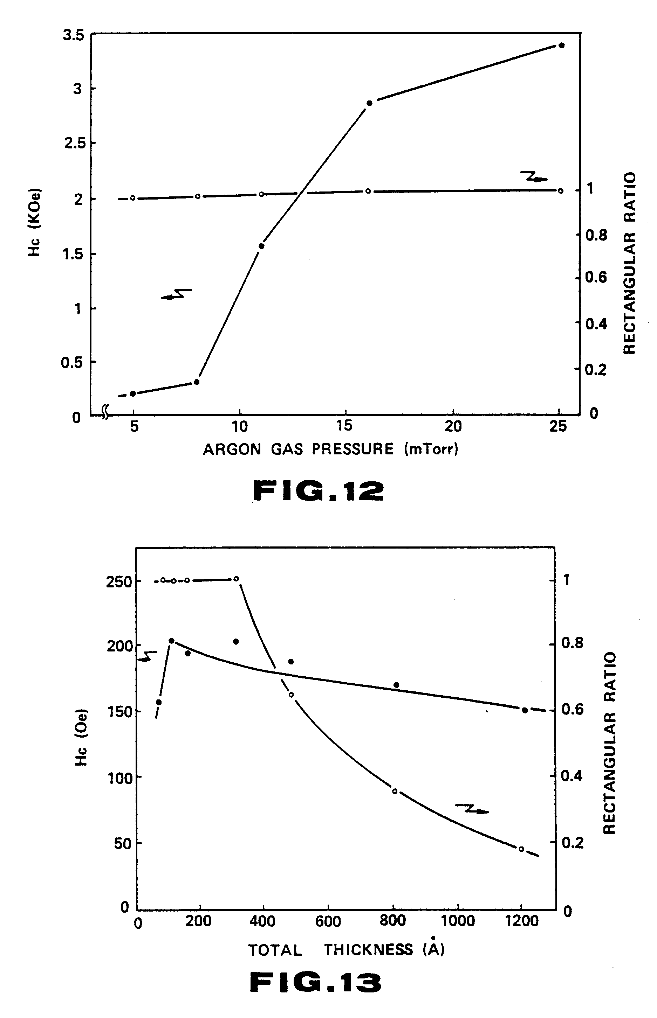

The argon gas pressure dependency, above all, the argon gas pressure dependency of the rectangular ratio and the coercive force during film formation was also checked. The produced Co-Pd base multi layered film had a total thickness 150 Å and the Co and Pd layer thicknesses of 3.8 and 7.8 Å, respectively. The results are shown in Fig. 12.

In the Co-Pd system, the rectangular ratio equal to unity was obtained for the totality of the tested gas pressures, thus substantially meeting the requirements of the perpendicular magnetization film. However, the coercive force was the higher for the higher gas pressure, reaching several kOe for the gas pressure higher than 10 mTorr (1.32 Pa). While the value of the coercive force Hc shown in Fig. 10 is that for the argon gas pressure of 11 mTorr (1.45 Pa), the value of the coercive force Hc several times that shown in fig. 10 is tought to be obtained for the totality of samples, if the samples were prepared under a higher gas pressure of e.g. 25 mTorr (3.29 Pa). However, there would naturally be certain limitations since the rectangular characteristics would be lowered under an extremely high gas pressure, even though the rectangular ratio should be maintained.

As in the case of the Co-Pt system, changes in magnetic characteristics caused when the film thickness of the Co-Pd type multi layered film was changed for the constant argon gas pressure at the time of the film formation were checked.

The thicknesses of the Co and Pd layers in the Co-Pd base multi layered film were 3.8 and 7.8 Å, respectively.

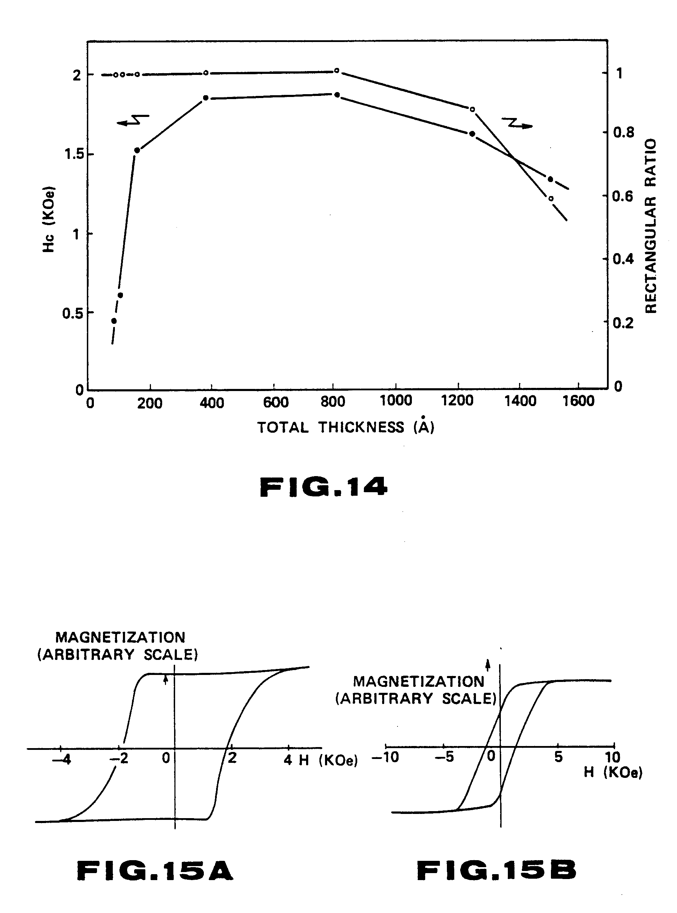

Figs. 13 and 14 show the film thickness dependency of the coercive force Hc and the rectangular ratio as found from the M-H loop for the argon gas pressures during the film formation of 5 and 11 mTorr (0.66 and 1.45 Pa), respectively.

The magnetic characteristics of the Co-Pd base multi layered film are changed markedly with the argon gas pressure, as discussed hereinabove.

Therefore, the film thickness dependency of the magnetic characteristics is also changed with the argon gas pressure at the time of the film formation, such that, for the lower gas pressure, the film thickness dependency behaves in much the same manner as the Co-Pt base multi layered film, with the rectangular ratio being lowered with increase in the film thickness. Under the higher gas pressure, for which the coercive force Hc is increased, the rectangular ratio equal to unity is maintained for the film thickness not larger than 800 Å, while a higher coercive force Hc is also assured. When the sample is produced under a higher gas pressure of not lower than, for example, 11 mTorr (1.32 Pa), not only the coercive force Hc is improved, but also the favorable film thickness dependency may be assured.

Figs. 15A and 15B show the M-H loops for the film thicknesses of 370 Å and 1500 Å, respectively, for the argon gas pressure of 11 m Torr (1.32 Pa). It is seen that, in case of the Co-Pd system, a magnetic film having a rectangular ratio not less than 0.5 may be obtained even for the film thickness in excess of 1000 Å, when the film is prepared under an elevated gas pressure, thus in a manner distinct from the case of the Co-Pt system. It is however difficult to obtain a rectangular ratio equal to unity.

In the perpendicular magnetic recording system, the rectangular ratio of the magnetic recording medium should ideally be equal to unity, since the larger the ratio, the higher the residual magnetic flux density and the better the SN ratio at the time of reproduction. Therefore, the Co-Pd base multi layered film having a film thickness of not larger than 800 Å may be said to be the most desirable material for perpendicular recording.

It has been demonstrated that the above described Co-Pd base multi layered film undergoes no changes in characteristics when allowed to stand under the constant temperature of 80 °C and the constant relative humidity (RH) of 85° % for 100 hours, while presenting no problems in corrosion resistance.

In the foregoing, description has been made of the Co-Pt base multi layered film and the Co-Pd base multi layered film. It is though that the saturation magnetization Ms or the coercive force Hc may be controlled by addition of other elements to the Co, Pt or Pd layers.

Also, in consideration that Pt and Pd form a complete system of solid solution, it is apparent that a multi layered film of Co and an Pt-Pd alloy or a multi layered film obtained upon alternate stacking of Co, Pt and Pd in the sequence of -Co-Pt-Co-Pd- has the characteristics similar to those of the above described Examples.

The present invention will be explained hereinbelow by referring to certain Examples for investigating into the effect of the under layer.

### Example 3

The present Example is concerned with a recording medium in which a Pt under layer is formed as the under layer for a Co-Pt base multi layered film.

The Pt under layer was formed to a thickness of 1000 Å by RF sputtering at an argon gas pressure of 11 mTorr (1.45 Pa) and a making power of 300 W.

On the other hand, the Co-Pt film was formed to a total thickness of 100 Å at an argon gas pressure less than 5 mTorr (0.66 Pa).

Co-Pt sample films with varying thicknesses of the Co and Pt layers were first prepared and the regions thereof showing perpendicular magnetic anisotropy were investigated.

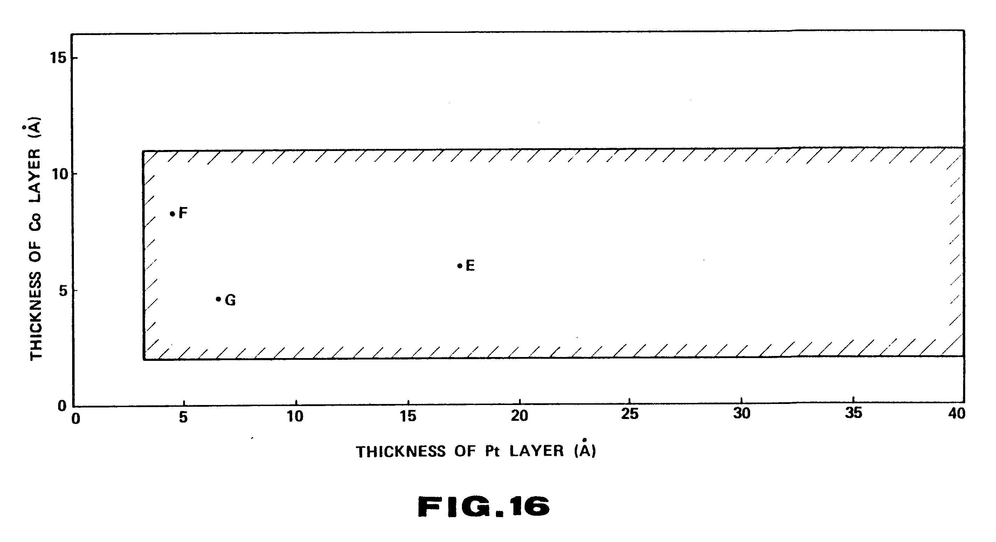

In Fig. 16, the thicknesses of the Co and Pt layers were plotted on the ordinate and on the abscissa, respectively. The regions in the figure indicated by hatching lines indicate those showing perpendicular magnetic anisotropy in the Co-Pt base multi layered film. The black dod marks in the figure indicate the produced samples.

In the present Co-Pt base multi layered film, the requirements for the perpendicular magnetization film are met under certain combinations of the thicknesses of the respective atom layers, namely the thickness of the Co layer ranging between 2 and 11 Å and the Pt layer ranging between 3 and 40 Å.

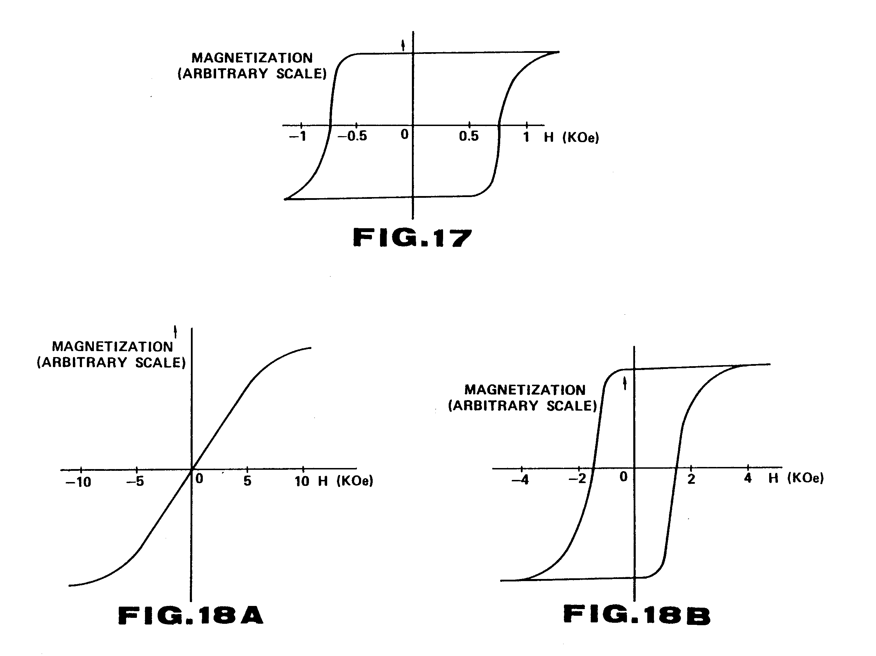

Fig. 17 shows the perpendicular magnetization curve or M-H loop of the multi layered film indicated by point E in Fig. 16.

The multi layered film (point E) showing the perpendicular magnetic anisotropy as indicated in Fig. 16 has a rectangular ratio equal to unity and excellent rectangular characteristics, as shown in Fig. 17.

Upon comparing the present multi layered film with the multi layered film not having the under layer for the thicknesses of the respective atomic layers showing perpendicular magnetic anisotropy, it is seen that the regions displaying perpendicular anisotropy have been extended by the provision of the under layer. Above all, the requirements for the perpendicular magnetization film are met in the direction of the increasing thickness of the Co layer.

Taking an example of the multi layered film shown at point F in Fig. 16, the M-H loops of the lattice film having and not having the Pt under layer are shown in Figs. 18A and 18B, respectively. It is seen from these figures that the perpendicular magnetic anisotropy is induced by the provision of the under layer.

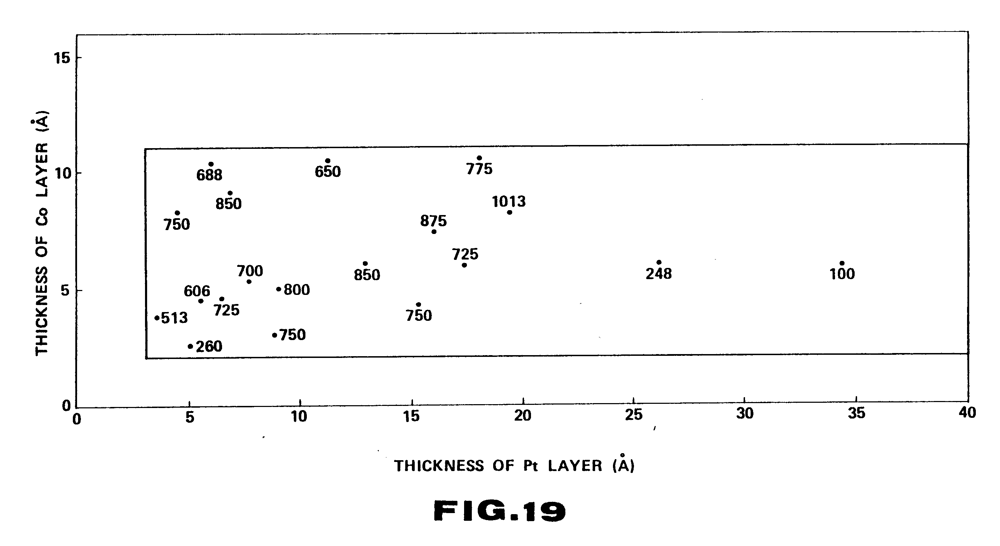

The values of the coercive force Hc of the typical samples showing perpendicular magnetic anisotropy, as found from the M-H loop, are shown collectively in Fig. 19. The values in this figure indicate the coercive force Hc at the respective points in oersteds (Oe).

As may be seen from Fig. 19, each of the samples had the coercive force Hc of the order of several hundreds of oersteds to about 1 kilooersteds (kOe), which is several to tens of times higher than in the absence of the under layer.

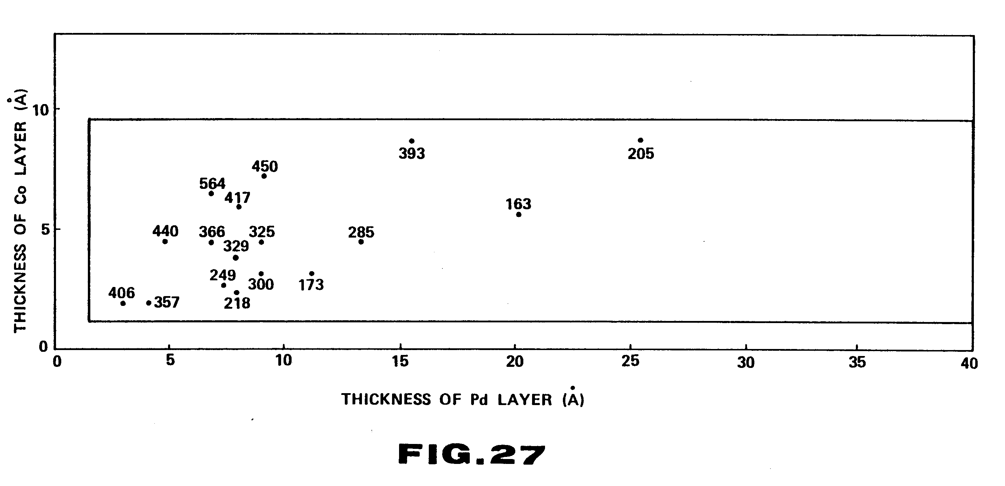

The values of saturation magnetization in emu/cm³ are shown in Fig. 27 for typical samples showing perpendicular magnetic anisotropy.

The value of the saturation magnetization was of the order of several hundreds to 900 emu/cm³ for the region showing perpendicular magnetic anisotropy, although the value was slightly changed with varying thickness ratios of the respective atomic layers. Thus the value of saturation magnetization is increased by 5 to 10 percent by the provision of the under layer as compared to the same value in the absence of the under layer. For example, the value of saturation magnetization of the sample shown at point E in Fig. 16 was increased from 190 emu/cm³ in the absence of the under layer to 203 emu/cm³ in the presence of the under layer.

Such increase in saturation magnetization is possibly ascribable to the improved crystallinity of the Co-Pt base multi layered film of the magnetic layer caused by the provision of the under layer.

Thus the changes in the magnetic characteristic in case the film thickness of the Co-Pt base multi layered film was changed for the constant under layer thickness were investigated.

The Co-Pt base multi layered film had the thicknesses of the Co and Pt layers of 6 and 17.2 Å, respectively, and the thickness of the Pt under layer of 1000 Å.

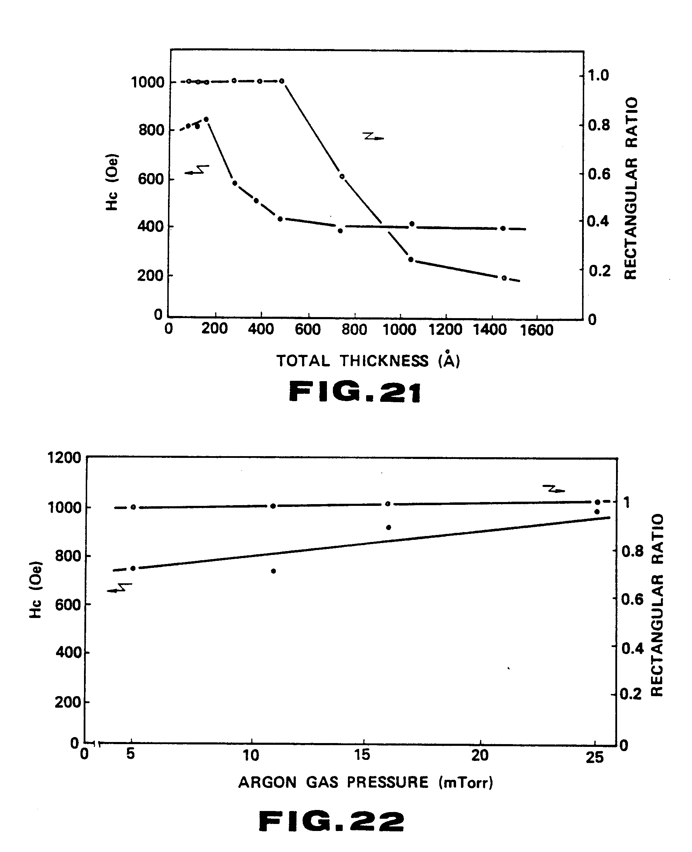

Fig. 21 shows the film thickness dependency of the coercive force Hc and the rectangular ratio, as found from the M-H loop. It is seen that the samples having the under layer are improved in coercive force Hc over the samples not having the under layer, and that the rectangular ratio equal to unity may be maintained up to a thicker film thickness. For example, the rectangular ratio equal to unity may be maintained for the film thickness not larger than 400 Å in the absence of the under layer, whereas the rectangular ratio equal to unity may be maintained up to the film thickness of 500 Å in the presence of the under layer, with the rectangular ratio being also increased for the larger film thicknesses. However, with the film thickness larger than 1000 Å, the rectangular ratio is lowered significantly even in the presence of the under layer.

The argon gas pressure dependency during film formation, above all, the argon gas pressure dependency of the rectangular ratio and the coercive force, was investigated, with the under layer thickness equal to 1000 Å. The results are shown in Fig. 22.

When the under layer was formed, the perpendicular magnetization film with the rectangular ratio equal to unity was obtained under the elevated gas pressure of not lower than 20 mTorr (2.64 Pa), while the gas pressure dependency of the magnetic characteristics was also improved.

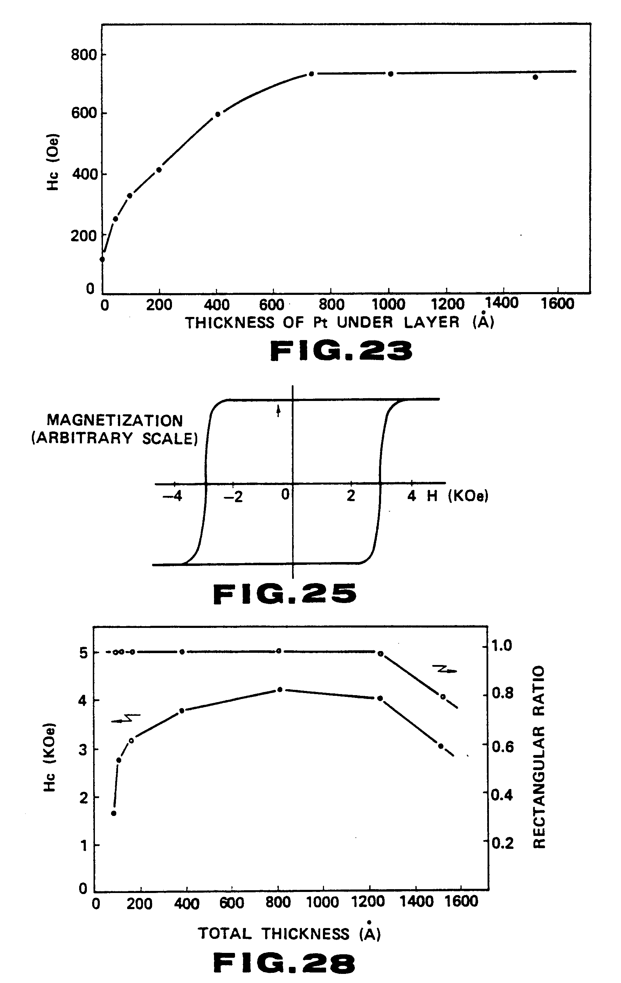

Finally, the film thickness dependency of the under layer (the film thickness dependency of the coercive force Hc) was investigated. The produced Co-Pt multi layered film had the atomic layers shown at point G in Fig. 16. The total thickness was 100 Å and the argon gas pressure at the time of the film formation was 5 mTorr (0.66 Pa). The results are shown in Fig. 23.

It is seen from this figure that the coercive force Hc is increased with increase in the under layer thicknesses, with the coercive force increasing effect reaching saturation at the under layer thickness of 700 to 800 Å.

The under layer several tens of Angstroms is effective to improve the coercive force Hc. Thus it is seen that the coercive force Hc may be controlled by the proper setting of the under layer thickness

### Example 4

The present Example is concerned with formation of the Pd under layer in the Co-Pd base multi layered film.

The Pd under layer was formed to a thickness of 1000 Å by RF sputtering at an argon gas pressure of 11 mTorr (1.45 Pa) and a making power of 300 W.

On the other hand, the Co-Pd film was formed to a total thickness of 150 Å at an argon gas pressure less than 11 mTorr (1.45 Pa).

Co-Pd sample films with varying thicknesses of the Co and Pd layers were first prepared and the regions thereof showing perpendicular magnetic anisotropy were investigated.

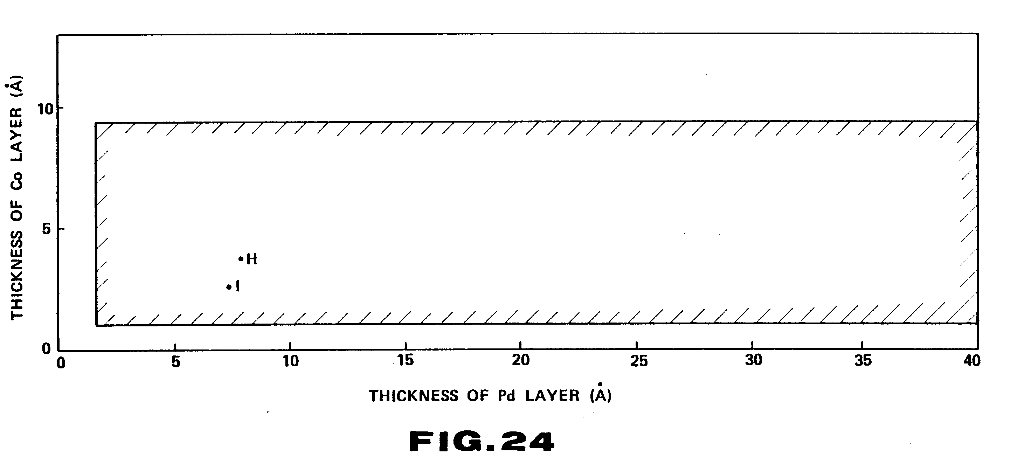

In Fig. 24, the thicknesses of the Co and Pd layers were plotted on the ordinate and on the abscissa, respectively. The regions in the figure indicated by hatching lines indicate those showing perpendicular magnetic anisotropy in the Co-Pd base multi layered film. The black dot marks in the figure indicate the produced samples.

In the present Co-Pd base multi layered film, the requirements for the perpendicular magnetization film are met under certain combinations of the thicknesses of the respective atom layers, namely the thickness of the Co layer ranging between 1 and 9.5 Å and the Pd layer ranging between 1.5 and 40 Å.

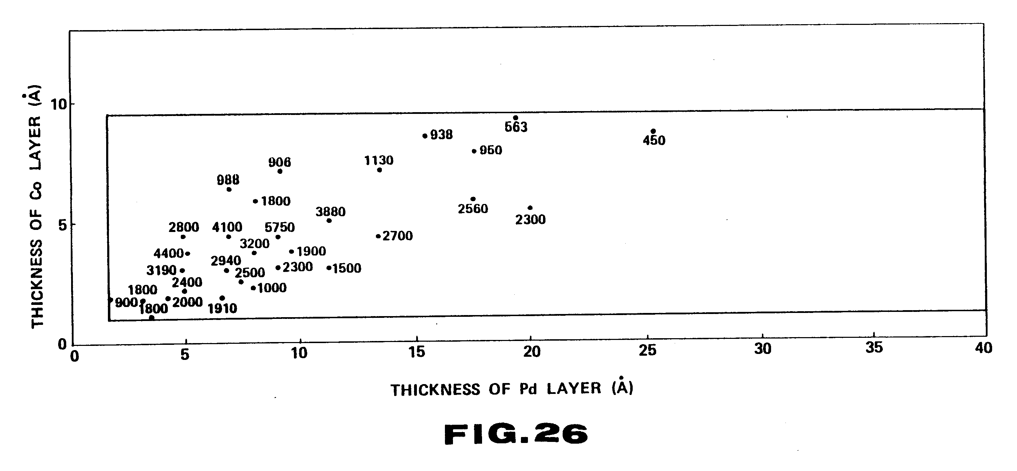

Fig. 25 shows the perpendicular magnetization curve or M-H loop of the multi layered film indicated by a point H in Fig. 24.

The multi layered film (point H) displaying the M-H loop of the multi layered film indicated by a point H in Fig. 24.

The multi layered film (point H) showing the perpendicular magnetic anisotropy as indicated in Fig. 24 has a rectangular ratio equal to unity and excellent rectangular characteristics, as shown in Fig. 25.

It is seen from this that, in the Co-Pd base multi layered film, the regions showing perpendicular anisotropy are also extended by the provision of the under layer. Above all, the requirements for the perpendicular magnetization film are met in the direction of the increasing thickness of the Co layer.

The values of the coercive force Hc of the typical samples showing perpendicular magnetic anisotropy, as found from the M-H loop, are shown collectively in Fig. 26. The values in this figure indicate the coercive force Hc at the respective points in oersteds (Oe).

As may be seen from Fig. 26, each of the samples had the coercive force Hc of the order of 500 Oe to about 1 kOe, which is several to tens of times higher than in the absence of the under layer.

The values of saturation magnetization in emu/cm³ are shown in Fig. 27 for typical samples showing perpendicular magnetic anisotropy.

The value of saturation magnetization was of the order of several hundreds to 700 emu/cm³ for the region showing perpendicular magnetic anisotropy, although the value was slightly changed with varying thickness ratios of the respective atomic layers. Thus the value of saturation magnetization is increased in the Co-Pd base multi layered film by 5 to 10 percent by the provision of the base coat as compared to the same value in the absence of the under layer.

Thus the changes in the magnetic characteristics in case the film thickness of the Co-Pd base multi layered film was changed for the constant under layer thickness were investigated.

The Co-Pd base multi layered film had the thicknesses of the Co and Pd layers of 3.8 and 7.8 Å, respectively, and the thickness of the Pd under layer of 1000 Å.

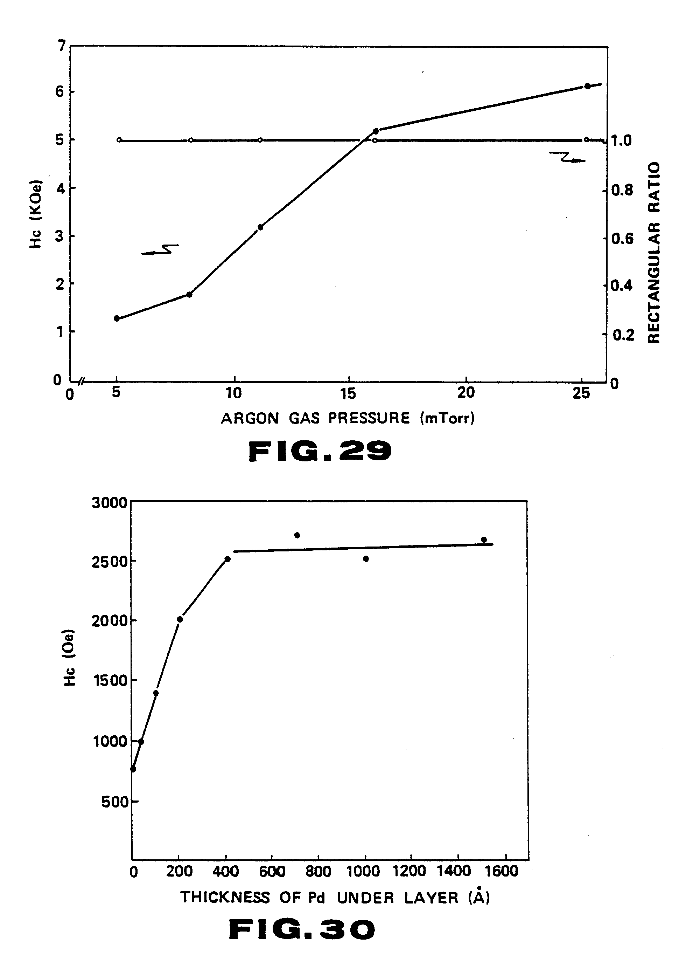

Fig. 28 shows the film thickness dependency of the coercive force Hc and the rectangular ratio as found from the M-H loop. It is seen that the samples having the under layer are improved in coercive force Hc over the samples not having the under layer and that the rectangular ratio equal to unity may be maintained up to a thicker film thickness.

The argon gas pressure dependnecy during film formation, above all, the argon gas pressure dependency of the rectangular ratio and the coercive force, was investigated, with the under layer thickness equal to 1000 Å. The results are shown in Fig. 29.

When the under layer was formed, the gas pressure dependency itself was qualitatively the same as that when the under layer is not formed. However, when the under layer was formed, the coercive force was markedly improved, reaching the maximum value of 6.1 kOe at the argon gas pressure not lower than 25 mTorr (3.29 Pa).

Finally, the film thickness dependency of the under layer (the film thickness dependency of the coercive force Hc) was investigated. The produced Co-Pd multi layered film had the atomic layers shown at point I in Fig. 24. The total thickness was 100 Å and the argon gas pressure at the time of the film formation was 5 mTorr (0.66 Pa). The results are shown in Fig. 30.

It is seen from this figure that the coercive force Hc is increased with increase in the under layer thickness, with the coercive force increasing effect reaching saturation at the under layer thickness of 700 to 800 Å.

The under layer several tens of Angstroms is effective to improve the coercive force Hc such that the coercive force Hc may be controlled by the proper setting of the under layer thickness.

In the forgoing, description has been made of the effect of the under layer. In any of the tested cases, provision of the under layer results in perpendicular anisotropy for the Co-rich regions, such that a perpendicular magnetization film with extremely high saturation magnetization may be produced. Thus a perpendicular magnetization film having an extremely high saturation magnetic flux density Bs of the order of 10 kG at the maximum and thus highly promising as the perpendicular magnetic recording medium, may be produced.

Finally, studies were made into the kinds of metal elements capable of improving the magnetic characteristics when used as the under layer material.

### Example 5

The magnetic characteristics of the Co-Pt base multi layered film shown at point G in Fig. 16 (total thickness, 100 Å; argon agas pressure at the time of film formation, 5 mTorr - 0.66 Pa) and the Co-Pd base multi layered film shown at point I in fig. 24 (total thickness, 150 Å; argon gas pressure at the time of film formation, 5 mTorr - 0.66 Pa) were investigated for the cases in which the films were provided with the under layers of the elements shown in the following Table to the thickness of 1000 Å. In this Table, changes in the coercive force Hc with the use of the various elements are also shown.

**Table**

| | Co-Pt | Co-Pd |
|---|---|---|
| - | 125 | 750 |
| Pt | 750 | 2400 |
| Pd | 745 | 2500 |
| Ag | 700 | 2600 |
| Au | 720 | 2450 |
| Cu | 650 | 1600 |
| W | 530 | 538 |
| Ir | 680 | 2200 |
| Rh | 650 | 2000 |
| Mo | 108 | 250 |
| Cr | 30 | 300 |
| V | 20 | 400 |
| Nb | 70 | 300 |
| Ta | 110 | 250 |
| Ti | 140 | 400 |
| Zr | 105 | 212 |
| Y | 69 | 200 |
| Si | 20 | 450 |
| Ge | 113 | 88 |
| Mn | 30 | 200 |
| Sb | 98 | 120 |
| Tb | 110 | 320 |
| Gd | 120 | 350 |

It is seen from this Table that the under layers of the elements Pt, Pd, Ag, Au, Cu, W, Ir or Rh are effective to improve the magnetic characteristics of the Co-Pt or Co-Pd base multi layered films.

Since the element Al also has been found to be effective, it has been confirmed that the above effects are generally proper to metal elements having the face-centered crystal structure.

## Claims

1. A perpendicular magnetic recording medium comprising a substrate and a magnetic layer formed on said substrate, said magnetic layer formed of a multi layered thin film of Co layers and Pt and/or Pd layers alternately stacked having a total thickness between 50 and 800 Å.

2. A perpendicular magnetic recording medium according to claim 1, said magnetic layer is formed of a multi layered thin film of Co layers and Pt layers.

3. A perpendicular magnetic recording medium according to claim 2, wherein said each of Co layers has a thickness between 2 and 8 Å and said each of Pt layers has a thickness between 3 and 40 Å.

4. A perpendicular magnetic recording medium according to claim 1, said magnetic layer is formed of a multi layered thin film of Co layers and Pd layers.

5. A perpendicular magnetic recording medium according to claim 4, wherein each of said Co layers has a thickness between 1 to 9 Å and each of said Pd layers has a thickness between 2 to 40 Å.

6. A perpendicular magnetic recording medium comprising a substrate, an under layer formed on said substrate and a magnetic layer formed on said under layer, said under layer being formed of at least one metal selected from the group consisting of Cu, Rh, Pd, Ag, Ir, Pt, Au, Al or W, and having a thickness between 200 and 2000 Å, said magnetic layer being formed of a multi layered thin film of Co layers and Pt and/or Pd layers alternately stacked and having a total thickness between 50 and 800 Å.

7. A perpendicular magnetic recording medium according to claim 6, said magnetic layer is formed of a multi layered thin film of Co layers and Pt layers.

8. A perpendicular magnetic recording medium according to claim 7, wherein each of said Co layers has a thickness between 2 and 11 Å, and each of said Pt layers has a thickness between 3 and 40 Å.

9. A perpendicular magnetic recording medium according to claim 6, said magnetic layer is formed of a multi layered thin film of Co layers and Pd layers.

10. A perpendicular magnetic recording medium according to claim 9, wherein each of said Co layers has a thickness between 1 and 9.5 Å and each of said Pd layers has a thickness between 1.5 and 40 Å.

## Patentansprüche

1. Aufzeichnungsmedium mit senkrechter Magnetisierung, umfassend einen Träger und eine auf dem Träger gebildete magnetische Schicht, wobei die magnetische Schicht aus einem mehrschichtigen Dünnfilm aus Co-Schichten und Pt- und/oder Pd-Schichten, welche alternierend aufeinandergeschichtet sind, einer Gesamtdicke zwischen 50 und 800 Å gebildet ist.

2. Aufzeichnungsmedium mit senkrechter Magnetisierung nach Anspruch 1, wobei die magnetische Schicht aus einem mehrschichtigen Dünnfilm aus Co-Schichten und Pt-Schichten gebildet ist.

3. Aufzeichnungsmedium mit senkrechter Magnetisierung nach Anspruch 2, wobei jede der Co-Schichten eine Dicke zwischen 2 und 8 Å und jede der Pt-Schichten eine Dicke zwischen 3 und 40 Å aufweist.

4. Aufzeichnungsmedium mit senkrechter Magnetisierung nach Anspruch 1, wobei die magnetische Schicht aus einem mehrschichtigen Dünnfilm aus Co-Schichten und Pd-Schichten gebildet ist.

5. Aufzeichnungsmedium mit senkrechter Magnetisierung nach Anspruch 4, wobei jede der Co-Schichten eine Dicke zwischen 1 und 9 Å und jede der Pd-Schichten eine Dicke zwischen 2 und 40Å besitzt.

6. Aufzeichnungsmedium mit senkrechter Magnetisierung, umfassend einen Träger, eine auf dem Träger gebildete Grundschicht und eine auf der Grundschicht gebildete magnetische Schicht, wobei die Grundschicht aus mindestens einem Metall gebildet ist, welches aus der aus Cu, Rh, Pd, Ag, Ir, Pt, Au, Al oder W bestehenden Gruppe gewählt ist und eine Dicke zwischen 200 und 2000 Å besitzt, die magnetische Schicht aus einem mehrschichtigen Dünnfilm aus Co-Schichten und Pt- und/oder Pd-Schichten, welche alternierend aufeinandergeschichtet sind, gebildet ist und eine Gesamtdicke zwischen 50 und 800 Å besitzt.

7. Aufzeichnungsmedium mit senkrechter Magnetisierung nach Anspruch 6, wobei die magnetische Schicht aus einem mehrschichtigen Dünnfilm aus Co-Schichten und Pt-Schichten gebildet ist.

8. Aufzeichnungsmedium mit senkrechter Magnetisierung nach Anspruch 7, wobei jede der Co-Schichten eine Dicke zwischen 2 und 11 Å und jede der Pt-Schichten eine Dicke zwischen 3 und 40Å besitzt.

9. Aufzeichnungsmedium mit senkrechter Magnetisierung nach Anspruch 6, wobei die magnetische Schicht aus einem mehrschichtigen Dünnfilm aus Co-Schichten und Pd-Schichten gebildet ist.

10. Aufzeichnungsmedium mit senkrechter Magnetisierung nach Anspruch 9, wobei jede der Co-Schichten eine Dicke zwischen 1 und 9,5 Å und jede der Pd-Schichten eine Dicke zwischen 1,5 und 40 Å besitzt.

## Revendications

1. Support d'enregistrement magnétique perpendiculaire, comprenant un substrat et une couche magnétique formée sur ledit substrat, ladite couche magnétique, qui est formée d'une pellicule mince multicouche faite de couches de Co et de couches de Pt et, ou bien, de Pd alternativement empilées ayant une épaisseur totale comprise entre 50 et 800 Å.

2. Support d'enregistrement magnétique perpendiculaire selon la revendication 1, où ladite couche magnétique est formée d'une pellicule mince multicouche de couches de Co et de couches de Pt.

3. Support d'enregistrement magnétique perpendiculaire selon la revendication 2, où chaque dite couche de Co possède une épaisseur comprise entre 2 et 8 Å et chaque dite couche de Pt possède une épaisseur comprise entre 3 et 40 Å.

4. Support d'enregistrement magnétique perpendiculaire selon la revendication 1, où ladite couche magnétique est formée d'une pellicule mince multicouche de couches de Co et de couches de Pd.

5. Support d'enregistrement magnétique perpendiculaire selon la revendication 4, où chaque dite couche de Co possède une épaisseur comprise entre 1 et 9 Å et chaque dite couche de Pd possède une épaisseur comprise entre 2 et 40 Å.

6. Support d'enregistrement magnétique perpendiculaire, comprenant un substrat, une sous-couche forméé sur ledit substrat et une couche magnétique formée sur ladite sous-couche, ladite sous-couche étant formée d'au moins un métal choisi dans le groupe constitué par Cu, Rh, Pd, Ag, Ir, Pt, Au, Al ou W, et ayant une épaisseur comprise entre 200 et 2000 Å, ladite couche magnétique étant formée d'une pellicule mince multicouche faite de couches de Co et de couches de Pt et, ou bien, de Pd alternativement empilées et ayant une épaisseur totale comprise entre 50 et 800 Å.

7. Support d'enregistrement magnétique perpendiculaire selon la revendication 6, où ladite couche magnétique est formée d'une pellicule mince multicouche de couches de Co et de couches de Pt.

8. Support d'enregistrement magnétique perpendiculaire selon la revendication 7, où chaque dite couche de Co possède une épaisseur comprise entre 2 et 11 Å, et chaque dite couche de Pt possède une épaisseur comprise entre 3 et 40 Å.

9. Support d'enregistrement magnétique perpendiculaire selon la revendication 6, où ladite couche magnétique est formée d'une pellicule mince multicouche de couches de Co et de couches de Pd.

10. Support d'enregistrement magnétique perpendiculaire selon la revendication 9, où chaque dite couche de Co possède une épaisseur comprise entre 1 et 9,5 Å et chaque dite couche de Pd possède une épaisseur comprise entre 1,5 et 40 Å.
